# EUROPEAN PATENT APPLICATION

(11) **EP 4 311 006 A1**
(43) Date of publication of application: **24.01.2024**
(21) Application number: 23753246.0
(22) Date of filing: 13.02.2023
(51) Int. Cl.: H01M 50/342, H01M 50/103, H01M 50/553

(54) **SECONDARY BATTERY COMPRISING VENTING UNIT**

(30) Priority: 14.02.2022 KR 20220018633
(71) Applicant: LG ENERGY SOLUTION, LTD., Seoul 07335 (KR)
(72) Inventor: PARK, Ji Min, Daejeon 34122 (KR); SUNG, Joo Hwan, Daejeon 34122 (KR); JUNG, Kyung Hwan, Daejeon 34122 (KR)
(74) Representative: Goddar, Heinz J.
(86) International application number: PCT/KR2023/002081
(87) International publication number: WO 2023/153900

(57) **Abstract**

The disclosed technology relates to a prismatic secondary battery. The prismatic secondary battery includes a battery case having a hexahedral shape, a positive electrode terminal and a negative electrode terminal which are disposed together on any one surface of six surfaces of the battery case or each disposed on one of any two surfaces thereof, a venting part provided on the same surface as at least one electrode terminal of the positive electrode terminal and the negative electrode terminal, and one or more terminal structures each including an extension terminal which is electrically connected to the electrode terminal disposed on the same surface as the venting part and is exposed at any one surface excluding a surface on which the venting part is provided.

## Description

### [Technical Field]

The present invention relates to a secondary battery including a venting part, and particularly, to a prismatic secondary battery having a hexahedral shape.

### [Background Technology of the Invention]

Secondary batteries are rechargeable unlike primarily batteries, and due to the possibility of a compact size and a high capacity, a lot of research on secondary batteries is being carried out. Due to technology development and an increase in demand for mobile devices and also due to electric vehicles and energy storage systems that are emerging in line with the needs of the times for environmental protection, the demand for secondary batteries as energy sources is more rapidly increasing.

Secondary batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

An electrode assembly may be approximately classified into a jelly-roll type electrode assembly in which a separator is interposed between a positive electrode and a negative electrode, each of which is provided in the form of a sheet coated with an active material, and then, the positive electrode, the separator, and the negative electrode are wound, a stack type electrode assembly in which a plurality of positive and negative electrodes with a separator interposed therebetween are sequentially stacked, and a stack/folding type electrode assembly in which stack type unit cells are wound with a separation film having a long length.

Regarding prismatic secondary batteries among various types of secondary batteries, in most prismatic secondary batteries, a positive electrode terminal and a negative electrode terminal are disposed together on one surface, or one positive electrode terminal and one negative electrode terminal are each disposed on one of two surfaces facing each other. In addition, in general, a venting part provided for the safety of a secondary battery is disposed between a positive electrode terminal and a negative electrode terminal disposed together on one surface or is disposed near each of the electrode terminals on both facing sides.

There is no particular problem in an arrangement of a venting part when a secondary battery operates normally. However, when internal pressure of the secondary battery is abnormally increased and the venting part is broken and gas is discharged, adjacent electrode terminals can be damaged. That is, when the venting part is broken and internal gas is ejected, a positive electrode terminal and a negative electrode terminal are damaged by corrosion, ignition, and the like, and the damage to the electrode terminals causes an electrical problem. Thus, it is highly likely that damage will not be limited to secondary batteries only. That is, when an electronic circuit of a module/pack is positioned at a position at which a terminal portion is positioned, a risk of explosion due to malfunction of the electronic circuit during venting is increased.

### [Related Art Documents]

### [Patent Documents]

(Patent Document 1) Korean Patent Publication No. 10-2019-0102816 (published on September 4, 2019)

### [Description of the Invention]

### [Technical Problem]

The present invention is directed to providing a prismatic secondary battery capable of effectively responding to damage and deterioration of electrode terminals caused by ejection of internal gas due to the breakage or opening of a venting part provided in a secondary battery.

However, the technical objects to be solved by the present invention are not limited to the above-described objects, and other objects that are not described herein will be clearly understood by those skilled in the art from the following descriptions of the present invention.

### [Technical Solution]

A prismatic secondary battery includes a battery case having a hexahedral shape, a positive electrode terminal and a negative electrode terminal which are disposed together on any one surface of six surfaces of the battery case or each disposed on one of any two surfaces thereof, a venting part provided on the same surface as at least one electrode terminal of the positive electrode terminal and the negative electrode terminal, and one or more terminal structures each including an extension terminal which is electrically connected to the electrode terminal disposed on the same surface as the venting part.

The terminal structure may include a terminal body which wraps around the electrode terminal such that the electrode terminal is not exposed and is coupled to one or more surfaces of the battery case, and the extension terminal.

An extension wire configured to electrically connect the extension terminal to the electrode terminal may not be exposed outward from the terminal body.

An extension wire configured to electrically connect the extension terminal to the electrode terminal may be insulated from an outside.

The positive electrode terminal, the negative electrode terminal, and the venting part may be disposed together on an upper surface of the battery case, and the terminal structures provided as a pair may each be electrically connected to one of the positive electrode terminal and the negative electrode terminal so that the extension terminals may be each exposed at one of two side surfaces of the battery case which face each other.

The positive electrode terminal, the negative electrode terminal, and the venting part may be disposed together on an upper surface of the battery case, and the terminal structures provided as a pair may each be electrically connected to one of the positive electrode terminal and the negative electrode terminal so that the extension terminalsmay be exposed at a front surface of the battery case or a rear surface facing the front surface.

The extension terminals of the terminal structures provided as a pair may be disposed together on any one surface of the front surface and the rear surface of the battery case or may each be disposed on one of the front surface and the rear surface of the battery case.

The positive electrode terminal, the negative electrode terminal, and the venting part may be disposed together on an upper surface of the battery case, and the terminal structures provided as a pair may each be electrically connected to one of the positive electrode terminal and the negative electrode terminal so that the extension terminals may each be exposed at any one surface of both side surfaces of the battery case facing each other or may be exposed at any one surface of front and rear surfaces of the battery case.

The positive electrode terminal, the negative electrode terminal, and the venting part may be disposed together on an upper surface of the battery case, and the terminal structures provided as a pair may each be electrically connected to one of the positive electrode terminal and the negative electrode terminal so that the extension terminals may each be exposed at a lower surface of the battery case.

The positive electrode terminal and the negative electrode terminal may each be disposed on one of two side surfaces of the battery case, the venting part may be disposed on at least one side surface of the two side surfaces of the battery case, and the terminal structures provided as a pair may each be electrically connected to one of the positive electrode terminal and the negative electrode terminal so that the extension terminals may each be exposed at an upper surface of the battery case.

The positive electrode terminal and the negative electrode terminal may each be disposed on one of two side surfaces of the battery case, the venting part may be disposed on at least one side surface of the two side surfaces of the battery case, and the terminal structures provided as a pair may each be electrically connected to one of the positive electrode terminal and the negative electrode terminal so that the extension terminals may each be exposed at a front surface or a rear surface of the battery case.

The extension terminals of the terminal structures provided as a pair may be disposed together on any one surface of the front surface and the rear surface of the battery case or may each be disposed on one of the front surface and the rear surface of the battery case.

The positive electrode terminal and the negative electrode terminal may each be disposed on one of two side surfaces of the battery case, the venting part may be disposed on at least one side surface of the two side surfaces of the battery case, and the terminal structures provided as a pair may each be electrically connected to one of the positive electrode terminal and the negative electrode terminal so that the extension terminals may each be exposed at any one surface of an upper surface, a front surface, and a rear surface of the battery case.

The positive electrode terminal and the negative electrode terminal may each be disposed on one of two side surfaces of the battery case, the venting part may be disposed on at least one side surface of the two side surfaces of the battery case, and the terminal structures provided as a pair may each be electrically connected to one of the positive electrode terminal and the negative electrode terminal so that the extension terminals may each be exposed at a lower surface of the battery case.

### [Advantageous Effects]

In a prismatic secondary battery having the above configuration of the present invention, even when an electrode terminal and a venting part are disposed on the same surface of a battery case, the electrode terminal can be physically separated and disposed on a different surface from the venting part by applying a terminal structure. Therefore, without a change in internal structure of an existing prismatic secondary battery, the position of the electrode terminal can be freely changed, thereby reducing a development period and production costs of the prismatic secondary battery.

In addition, since a position of an electrode terminal of a prismatic secondary battery can be easily changed, a high degree of freedom can be provided to a design of a battery module and a battery pack.

However, the technical effects obtainable through the present invention are not limited to the above-described effects, and other effects that are not described herein will be clearly understood by those skilled in the art from the following descriptions of the present invention.

### [Brief Description of the Drawings]

The accompanying drawings illustrate exemplary embodiments of the present invention and, together with the following detailed description, serve to provide further understanding of the technical spirit of the present invention. However, the present invention is not to be construed as being limited to the drawings.
FIG. 1 is a view illustrating an example of a unidirectional prismatic secondary battery.
FIGS. 2 to 6 are views illustrating various examples of a prismatic secondary battery according to a first embodiment of the present invention.
FIG. 7 is a view illustrating an example of a bidirectional prismatic secondary battery.
FIGS. 8 and 12 are views illustrating various examples of a prismatic secondary battery according to a second embodiment of the present invention.
FIGS. 13 to 17 are views illustrating various examples of a prismatic secondary battery according to a third embodiment of the present invention.

### [Best Mode for Carrying Out the Invention]

While the present invention may be variously changed and have various embodiments, specific embodiments will be described in detail below.

However, it should be understood that there is no intention to limit the present invention to the particular embodiments disclosed, and on the contrary, the present invention is to cover all modifications, equivalents, and alternatives falling within the spirit and scope of the present invention.

In this application, it should be understood that terms such as "include" or "have" are intended to indicate the presence of a feature, number, step, operation, component, part, or a combination thereof described on the specification, and they do not preclude the possibility of the presence or addition of one or more other features or numbers, steps, operations, components, parts or combinations thereof.

Also, when a portion such as a layer, a film, an area, a plate, etc. is referred to as being "on" another portion, this includes not only the case where the portion is "directly on" another portion but also the case where still another portion is interposed therebetween. On the other hand, when a portion such as a layer, a film, an area, a plate, etc. is referred to as being "under" another portion, this includes not only the case where the portion is "directly under" another portion but also the case where still another portion is interposed therebetween. In addition, to be disposed "on" in the present application may include the case disposed at the bottom as well as the top.

The present invention relates to a prismatic secondary battery including a venting part, and particularly, to a prismatic secondary battery in which six flat surfaces form a hexahedral shape. The prismatic secondary battery includes a positive electrode terminal and a negative electrode terminal disposed together on any one surface of six surfaces of a battery case or each disposed on one of any two surfaces thereof, a venting part provided on the same surface as at least one electrode terminal of the positive electrode terminal and the negative electrode terminal, and one or more terminal structures each including an extension terminal which is electrically connected to the electrode terminal disposed on the same surface as the venting part and is exposed at any one surface excluding a surface on which the venting part is provided.

Even when the above-described prismatic secondary battery of the present invention is designed and manufactured such that the electrode terminal and the venting part are disposed on the same surface, the electrode terminal may be physically separated and disposed on a different surface from the venting part by applying the terminal structure. Therefore, without a change in internal structure of an existing prismatic secondary battery, the position of the electrode terminal can be freely changed, thereby reducing a development period and production costs of the prismatic secondary battery.

In addition, in the prismatic secondary battery of the present invention, the position of the electrode terminal can be freely determined in consideration of the position of the venting part. Thus, even when a battery module or pack is designed, it is possible to easily set a diffusion direction of gas or flame ejected from the venting part to the safest direction and simultaneously secure a high degree of freedom for optimally determining the position of the electrode terminal.

Hereinafter, specific embodiments of a prismatic secondary battery of the present invention will be described with reference to the accompanying drawings. For reference, front, rear, left, and right directions or up and down directions for designating relative positions used in the description of each embodiment are used to help the understanding of the present invention and are based on directions shown in the drawings unless not specifically defined.

### [First Embodiment]

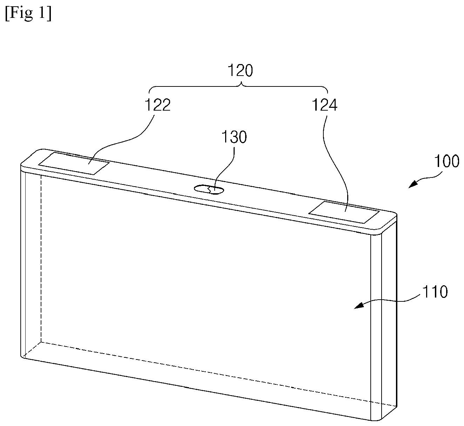

FIG. 1 is a view illustrating an example of a prismatic secondary battery 100 to which a first embodiment of the present invention is applicable. The prismatic secondary battery 100 of FIG. 1 corresponds to a unidirectional secondary battery in which electrode terminals 120 including a positive electrode terminal 122 and a negative electrode terminal 124 are disposed together on an upper surface of a battery case 110.

A venting part 130 is also disposed on the upper surface of the battery case 110. In the illustrated example, the venting part 130 is positioned between the positive electrode terminal 122 and the negative electrode terminal 124. The venting part 130 corresponds to a safety device which discharges gas when internal pressure of the prismatic secondary battery 100 increases to a certain level or more. For example, a notching process may be performed such that the venting part 130 has a thickness that is less than a thickness of a surrounding area, and thus the venting part 130 may be formed to be structurally weaker than the surrounding area. Accordingly, when an abnormality occurs in the prismatic secondary battery 100 and the internal pressure increases to a certain level or more, the venting part 130 is first broken so that gas generated inside the prismatic secondary battery 100 is discharged.

However, when the venting part 130 and the electrode terminal 120 are positioned on the same surface of the battery case 110, the electrode terminal 120 is highly likely to be damaged by corrosion, ignition, and the like when the venting part 130 is broken and internal gas is ejected. The present invention is directed to solving such a problem by providing terminal structures 200.

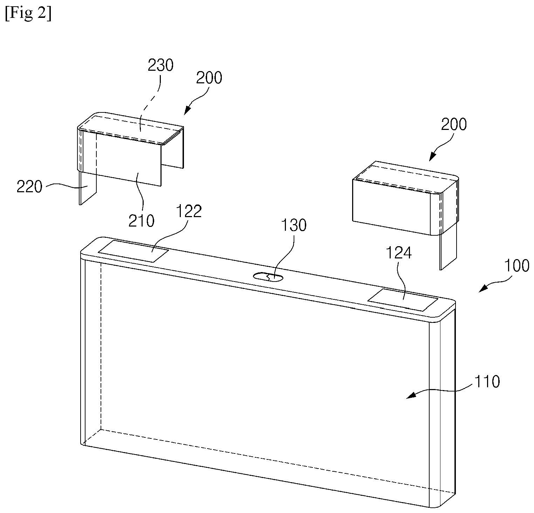

FIG. 2 is a perspective view illustrating a coupling structure between the prismatic secondary battery 100 and the terminal structures 200. The terminal structures 200 are hinge-type structures coupled to two or more adjacent surfaces of the battery case 110 and each include a terminal body 210 and an extension terminal 220.

The terminal bodies 210 are bodies of the terminal structures which wrap around the electrode terminals 120, that is, the positive electrode terminal 122 and the negative electrode terminal 124, such that the positive electrode terminal 122 and the negative electrode terminal 124 are not exposed and which are closely coupled to two adjacent surfaces of the battery case 110. For example, in the embodiment of FIG. 2, the terminal body 210 may be configured to cover front and rear surfaces and a side surface which are adjacent to the upper surface of the battery case 110. The terminal body 210 is coupled to the battery case 110 (for example, through an adhesive or bonding) to fix the terminal structure 200to the battery case 110.

The extension terminal 220 is a connection terminal which is electrically connected to the electrode terminal 120 and exposed at one surface of the terminal body 210. That is, since the positive electrode terminal 122 and the negative electrode terminal 124 are wrapped with the terminal body 210 and not exposed, the extension terminal 220 serves as a new electrode terminal 120 moved to another surface other than the upper surface on which the venting part 130 is positioned, for example, the side surface of the battery case 110 in the embodiment of FIG. 2.

As described above, in the prismatic secondary battery 100 of the present invention including the terminal structure 200, without a separate design change, and only by applying the terminal structure 200, the position of the electrode terminal 120 disposed on the upper surface of the battery case 110 may be physically separated from the venting part 130. Therefore, in the present invention, without a change in internal structure of an existing prismatic secondary battery 100, the position of the electrode terminal 120 is freely changed to separate the electrode terminal 120 from the venting part 130, thereby reducing a development period and production costs of the prismatic secondary battery 100.

The electrode terminal 120 and the extension terminal 220 are electrically connected through an extension wire 230, and the extension wire 230 is not exposed to the outside of the terminal body 210. The extension wire 230 is insulated from the outside. For example, the extension wire 230 and the extension terminal 220 may be embedded in the terminal body 210 made of an insulating resin material through insert molding or the like. Thus, only the extension terminal 220 is exposed to the outside, thereby preventing a problem in that the extension wire 230 is damaged or short-circuited. For reference, the extension wire 230 and the extension terminal 220 may be integrally formed or may be provided as separate parts to be coupled to the terminal body 210.

Regarding the embodiment of FIG. 2 again, the positive electrode terminal 122 and the negative electrode terminal 124 disposed adjacent to the venting part 130 on the upper surface of the battery case 110 have been moved to both side surfaces by one pair of terminal structures 200. That is, in FIG. 2, the extension terminal 220 of the terminal structure 200 is exposed at the side surface of the battery case 110. Accordingly, in the embodiment of FIG. 2, a unidirectional secondary battery in which the positive electrode terminal 122 and the negative electrode terminal 124 are disposed together on the upper surface of the battery case 110 is changed into a bidirectional secondary battery.

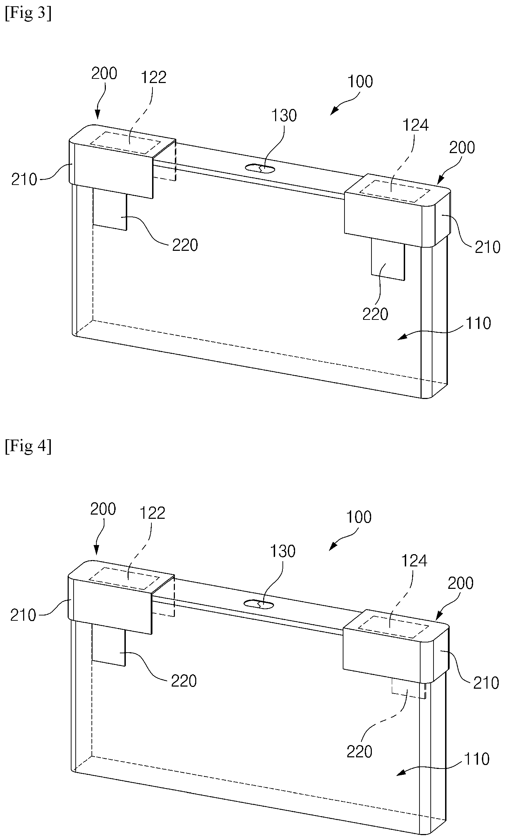

In addition to the embodiment of FIG. 2, various embodiments are possible in which the electrode terminal 120 is separated from the venting part 130, and such variations are shown in FIGS. 3 to 6.

FIG. 3 illustrates an embodiment in which the extension terminals 220 of the terminal structures 200 provided as a pair are disposed together on the front surface of the battery case 110. In addition, of course, an embodiment is possiblein which one pair of extension terminals 220 are disposed on the rear surface facing the front surface of the battery case 110, that is, an embodiment which is symmetrical with that of FIG. 3 is also possible.

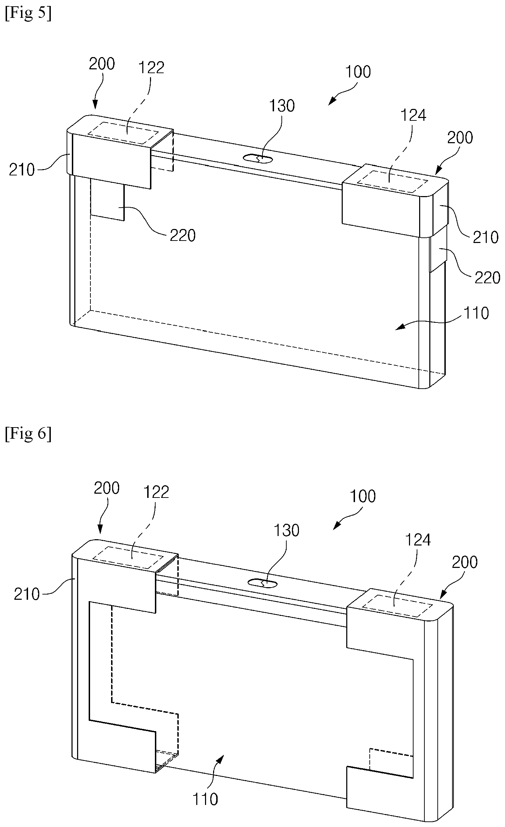

FIG. 4 illustrates an embodiment in which the extension terminals 220 of the terminal structures 200 provided as a pair are divided and each disposed on one of the front surface and the rear surface of the battery case 110. FIG. 5 is an embodiment in which any one of one pair of extension terminals 220 is exposed at any one surface of facing side surfaces of the battery case 110 and the other one thereof is exposed at any one surface of the front and rear surfaces of the battery case 110.

As described above, the terminal structure 200 can be designed in various specifications to change an arrangement of the positive electrode terminal 122 and the negative electrode terminal 124, and thus when a battery module or pack is manufactured, a high degree of freedom can be provided to a design of electrical lines such as busbars.

FIG. 6 illustrates an embodiment in which, in the prismatic secondary battery 100 in which the positive electrode terminal 122, the negative electrode terminal 124, and the venting part 130 are disposed together on the upper surface of the battery case 110, the extension terminals 220 of the terminal structures 200 provided as a pair are moved to a lower surface of the battery case 110. That is, the embodiment of FIG. 6 shows that the electrode terminal 120 and the venting part 130 can be spaced the farthest apart on the battery case 110 by applying the terminal structure 200.

Meanwhile, although not shown, the extension terminals 220 of the terminal structures 200 coupled to the positive electrode terminal 122 and the negative electrode terminal 124 may be designed to have vertical or bilateral asymmetry.

### [Second Embodiment]

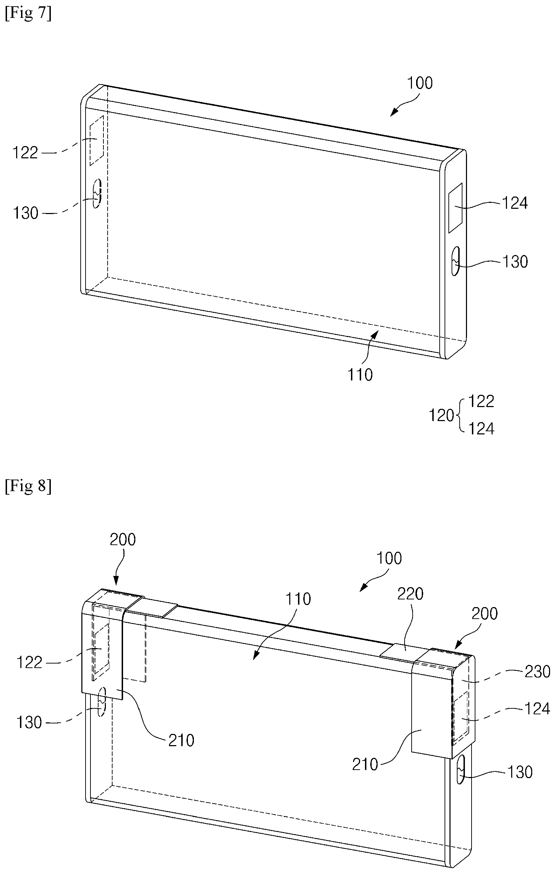

A second embodiment of the present invention is shown in FIGS. 7 to 11. FIG. 7 is a view illustrating an example of a prismatic secondary battery 100 to which the second embodiment of the present invention is applied. The illustrated prismatic secondary battery 100 corresponds to a bidirectional secondary battery 100 in which electrode terminals 120 including a positive electrode terminal 122 and a negative electrode terminal 124 are divided and each disposed on one of two side surfaces of a battery case 110.

In addition, since a configuration of a terminal structure 200 is the same as that of the first embodiment, the second embodiment will be described below based on an arrangement of the terminal structures 200 in the second embodiment, in particular, an arrangement of extension terminals 220.

When describing the embodiment of FIG. 8, in the prismatic secondary battery 100, the positive electrode terminal 122 and the negative electrode terminal 124 are each disposed on one of two side surfaces of the battery case 110, and a venting part 130 is disposed on at least one side surface of the two side surfaces of the battery case 110. The terminal structures 200 provided as a pair are electrically connected to the positive electrode terminal 122 and the negative electrode terminal 124, respectively, and the extension terminals 220 are exposed at an upper surface of the battery case 110.

The embodiment of FIG. 8 may be an embodiment in which a bidirectional secondary battery is changed into a unidirectional secondary battery, as opposed to the above-described embodiment of FIG. 2. That is, the embodiment of FIG. 8 is an embodiment in which the electrode terminal and the venting part 130 disposed together on a side surface of the battery case 110 may be separated, and at the same time, the bidirectional secondary battery may be changed into the unidirectional secondary battery.

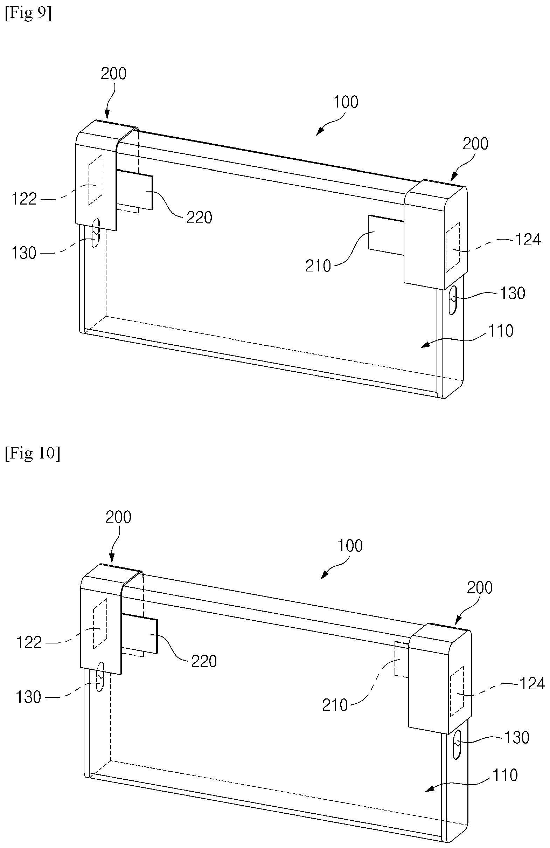

FIGS. 9 to 12 illustrate various arrangements of the extension terminals 220 by the terminal structures 200 applied to the bidirectional secondary battery.

FIG. 9 illustrates an embodiment in which the extension terminals 220 of the terminal structures 200 provided as a pair are disposed together on a front surface of the battery case 110. In addition, of course, an embodiment is possible in which one pair of extension terminals 220 are disposed on a rear surface facing the front surface of the battery case 110.

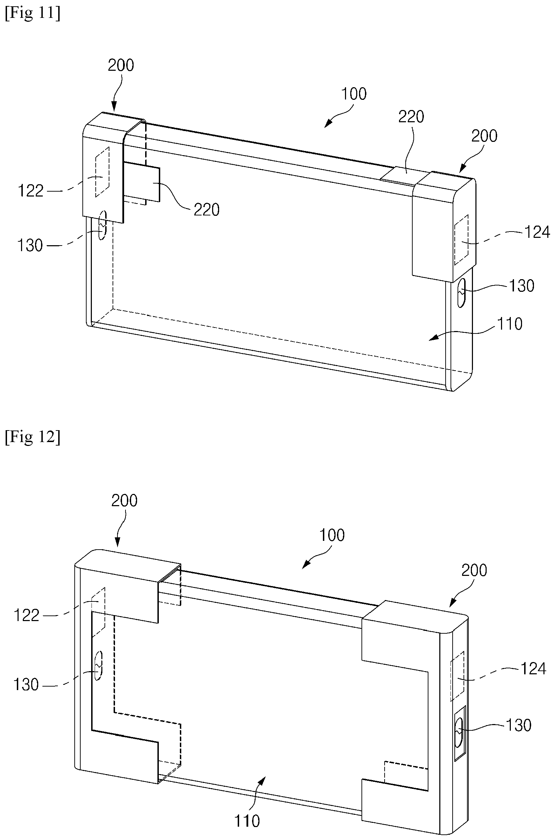

FIG. 10 illustrates an embodiment in which the extension terminals 220 of the terminal structures 200 provided as a pair are divided and each disposed on one of the front surface and the rear surface of the battery case 110. Also, FIG. 11 illustrates an embodiment in which any one of one pair of extension terminals 220 is exposed at any one surface of both facing side surfaces of the battery case 110, and the other one thereof is exposed at any one surface of the front and rear surfaces.

FIG. 12 illustrates an embodiment in which, in the prismatic secondary battery 100 in which the positive electrode terminal 122 and the negative electrode terminal 124 are each disposed on one of two side surfaces of the battery case 110, and the venting part 130 is disposed on at least one side surface of the two side surfaces of the battery case 110, the extension terminals 220 of the terminal structures 200 provided as a pair are moved to a lower surface of the battery case 110.

### [Third Embodiment]

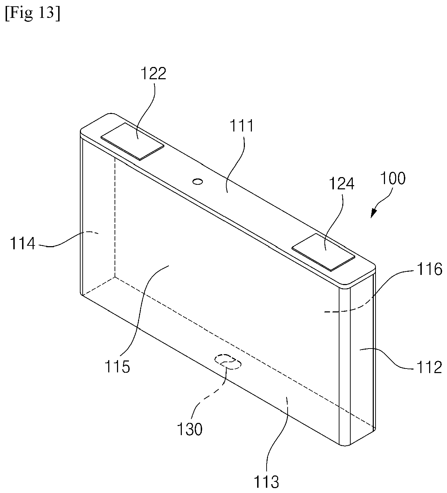

FIGS. 13 to 17 are views of a third embodiment of the present invention.

Referring to the accompanying drawings, in a prismatic secondary battery 100, six flat surfaces that are first to sixth surfaces 111 to 116 constitute a hexahedral shape, and for convenience of description and understanding, the first to sixth surfaces 111 to 116 are defined as follows based on the accompanying drawings. Four surfaces disposed in a clockwise direction from an upper surface will be referred to as the first to fourth surfaces 111 to 114, a front surface will be referred to as the fifth surface 115, and a rear surface will be referred to as the sixth surface 116.

The embodiment of FIGS. 13 to 15 relates to a unidirectional secondary battery in which a positive electrode terminal 122 and a negative electrode terminal 124 are disposed on an upper surface that is the first surface 111 of the first to sixth surfaces 111 to 116. The positive electrode terminal 122 and the negative electrode terminal 124 are disposed together on the first surface 111, and a venting part 130 is disposed on another surface other than the first surface 111.

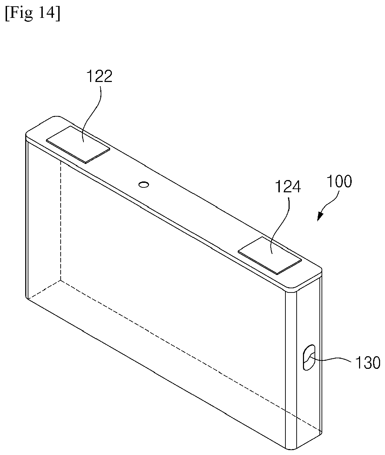

FIG. 13 illustrates an example in which the venting part 130 is disposed on a lower surface that is the third surface 113, and FIG. 14 illustrates an example in which the venting part 130 is disposed on a right surface that is the second surface 112. An example in which the venting part 130 is positioned on a left surface that is the fourth surface 114 is not shown separately because the example is symmetrical with that of FIG. 14.

As shown in FIGS. 13 and 14, since the venting part 130 is originally separated and disposed on a different surface from the positive electrode terminal 122 and the negative electrode terminal 124, the prismatic secondary battery 100 of the third embodiment has high stability and a high degree of freedom of installation.

The embodiment shown in FIGS. 13 and 14 shows an example in which the venting part 130 is provided on only one surface of the prismatic secondary battery 100. For reference, although one venting part 130 is illustrated in the drawings as being provided on one surface, a plurality of venting parts 130 may be provided on one surface.

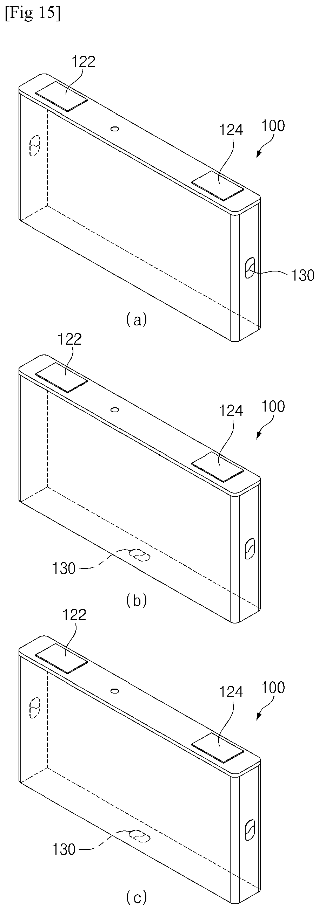

FIG. 15 is a set of views exemplarily illustrating a case in which the venting parts 130 are provided on a plurality of surfaces in the prismatic secondary battery 100 according to the third embodiment. That is, as shown in FIGS. 15A and 15B, the venting parts 130 are provided on two facing surfaces (for example, the second surface and the fourth surface) or two consecutive surfaces (for example, the second surface and the third surface). Alternatively, as shown in FIG. 15C, the venting parts 130 may be provided on three consecutive surfaces (for example, the second to fourth surfaces). Although not shown, of course, the venting parts 130 may also be provided on the front and rear surfaces, that is, the fifth surface 115 and the sixth surface.

However, when the prismatic secondary battery 100 has a rectangular parallelepiped shape, the positive electrode terminal 122 and the negative electrode terminal 124 may be disposed together on a surface with the widest area, that is, on any one surface excluding the front and rear surfaces in the drawing. Correspondingly, the venting part 130 may be disposed on at least one surface of the remaining three surfaces excluding two facing surfaces having the widest area.

This is because, as shown in the drawings, when the prismatic secondary battery 100 has a flat rectangular parallelepiped shape, since the greatest force acts on the front and rear surfaces having the widest area (assuming that internal pressure is uniform), it is necessary to consider that, when the venting parts 130 are positioned on the front and rear surfaces, the venting parts 130 may be more easily ruptured than a design purpose by weak vibrations or disturbances.

In one embodiment of the present invention, when internal pressure of the prismatic secondary battery 100 increases to a certain level or more, the venting part 130 may be broken to discharge gas. For example, a notching process may be performed such that the venting part 130 has a thickness that is less than a thickness of a surrounding area, and thus the venting part 130 may be formed to be structurally weaker than the surrounding area. Accordingly, when an abnormality occurs in the prismatic secondary battery 100 and the internal pressure increases to a certain level or more, the venting part 130 is first broken so that gas generated inside the prismatic secondary battery 100 is discharged.

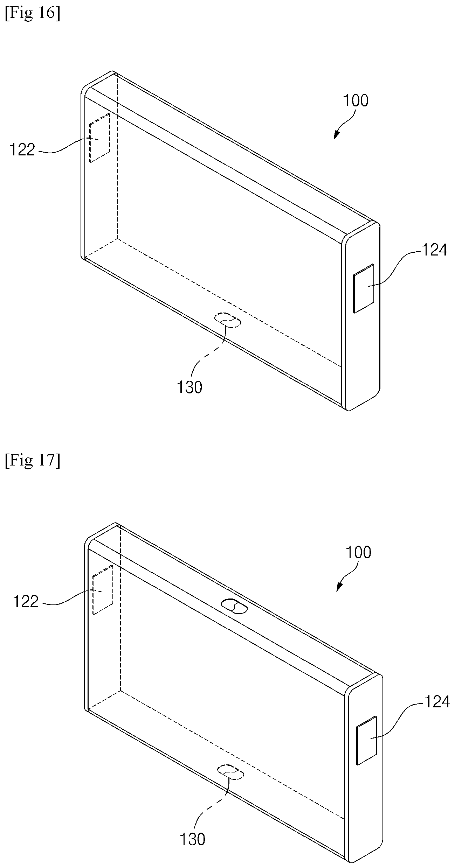

Also, the embodiment of FIGS. 16 and 17 relates to a bidirectional secondary battery in which the positive electrode terminal 122 and the negative electrode terminal 124, that is, the electrode terminals 120, are each disposed on one of two facing surfaces among the first to sixth surfaces 111 to 116, that is, on two side surfaces that are the second surface 112 and the fourth surface 114 in the drawing.

The embodiment is basically the same as the above-described embodiment of FIGS. 13 to 15 but is different from the above-described embodiment of FIGS. 13 to 15 in that, since the positive electrode terminal 122 and the negative electrode terminal 124 are disposed on two facing surfaces of a hexahedron, the number of surfaces on which the venting parts 130 can be disposed is reduced by one.

According to FIG. 16, other than the second surface 112 and the fourth surface 114 on which the negative electrode terminal 124 and the positive electrode terminal 122 are respectively disposed, the venting part 130 is provided on the third surface 113 that is the lower surface. Also, when the prismatic secondary battery 100 has a rectangular parallelepiped shape, the positive electrode terminal 122 and the negative electrode terminal 124 may be respectively disposed on two surfaces facing each other excluding a surface with the largest area. Correspondingly, the venting part 130 may be disposed on at least one surface of the remaining two surfaces excluding two facing surfaces having the largest area.

That is, as shown in FIG. 16, the venting part 130 may be disposed on one third surface 113 that is the lower surface, or as shown in FIG. 17, the venting parts 130 may be disposed on the first surface 111 corresponding to the upper surface and the third surface 113 that is the lower surface facing the first surface 111, respectively.

In the above, the present invention has been described in more detail through the drawings and embodiments. However, the configurations described in the drawings or the embodiments in the specification are merely embodiments of the present invention and do not represent all the technical ideas of the present invention. Thus, it is to be understood that there may be various equivalents and variations in place of them at the time of filing the present application.

### [Description of reference numerals]

| | | | |
|---|---|---|---|
| 100: | prismatic secondary battery | 110: | battery case |
| 111: | first surface | 112: | second surface |
| 113: | third surface | 114: | fourth surface |
| 115: | fifth surface | 116: | sixth surface |
| 120: | electrode terminal | 122: | positive electrode terminal |
| 124: | negative electrode terminal | 130: | venting part |
| 200: | terminal structure | 210: | terminal body |
| 220: | extension terminal | 230: | extension wire |

## Claims

1. A prismatic secondary battery comprising:
a battery case having a hexahedral shape;
a positive electrode terminal and a negative electrode terminal which are disposed together on any one surface of six surfaces of the battery case or each disposed on one of any two surfaces thereof;
a venting part provided on the same surface as at least one electrode terminal of the positive electrode terminal and the negative electrode terminal; and
one or more terminal structures each including an extension terminal which is electrically connected to the electrode terminal disposed on the same surface as the venting part and is exposed at any one surface excluding a surface on which the venting part is provided.

2. The prismatic secondary battery of claim 1, wherein the terminal structure includes:
a terminal body which wraps around the electrode terminal such that the electrode terminal is not exposed and is coupled to one or more surfaces of the battery case; and
the extension terminal.

3. The prismatic secondary battery of claim 2, wherein an extension wire configured to electrically connect the extension terminal to the electrode terminal is not exposed outward from the terminal body.

4. The prismatic secondary battery of claim 2, wherein an extension wire configured to electrically connect the extension terminal to the electrode terminal is insulated from an outside.

5. The prismatic secondary battery of claim 1, wherein:
the positive electrode terminal, the negative electrode terminal, and the venting part are disposed together on an upper surface of the battery case; and
the terminal structures provided as a pair are each electrically connected to one of the positive electrode terminal and the negative electrode terminal so that the extension terminals are each exposed at one of two side surfaces of the battery case which face each other.

6. The prismatic secondary battery of claim 1, wherein:
the positive electrode terminal, the negative electrode terminal, and the venting part are disposed together on an upper surface of the battery case; and
the terminal structures provided as a pair are each electrically connected to one of the positive electrode terminal and the negative electrode terminal so that the extension terminals are exposed at a front surface of the battery case or a rear surface facing the front surface.

7. The prismatic secondary battery of claim 6, wherein the extension terminals of the terminal structures provided as a pair are disposed together on any one surface of the front surface and the rear surface of the battery case or are each disposed on one of the front surface and the rear surface of the battery case.

8. The prismatic secondary battery of claim 1, wherein:
the positive electrode terminal, the negative electrode terminal, and the venting part are disposed together on an upper surface of the battery case; and
the terminal structures provided as a pair are each electrically connected to one of the positive electrode terminal and the negative electrode terminal so that the extension terminals are each exposed at any one surface of both side surfaces of the battery case facing each other or are exposed at any one surface of front and rear surfaces of the battery case.

9. The prismatic secondary battery of claim 1, wherein:
the positive electrode terminal, the negative electrode terminal, and the venting part are disposed together on an upper surface of the battery case; and
the terminal structures provided as a pair are each electrically connected to one of the positive electrode terminal and the negative electrode terminal so that the extension terminals are each exposed at a lower surface of the battery case.

10. The prismatic secondary battery of claim 1, wherein:
the positive electrode terminal and the negative electrode terminal are each disposed on one of two side surfaces of the battery case;
the venting part is disposed on at least one side surface of the two side surfaces of the battery case; and
the terminal structures provided as a pair are each electrically connected to one of the positive electrode terminal and the negative electrode terminal so that the extension terminals are each exposed at an upper surface of the battery case.

11. The prismatic secondary battery of claim 1, wherein:
the positive electrode terminal and the negative electrode terminal are each disposed on one of two side surfaces of the battery case;
the venting part is disposed on at least one side surface of the two side surfaces of the battery case; and
the terminal structures provided as a pair are each electrically connected to one of the positive electrode terminal and the negative electrode terminal so that the extension terminals are each exposed at a front surface or a rear surface of the battery case.

12. The prismatic secondary battery of claim 11, wherein the extension terminals of the terminal structures provided as a pair are disposed together on any one surface of the front surface and the rear surface of the battery case or each disposed on one of the front surface and the rear surface of the battery case.

13. The prismatic secondary battery of claim 1, wherein:
the positive electrode terminal and the negative electrode terminal are each disposed on one of two side surfaces of the battery case;
the venting part is disposed on at least one side surface of the two side surfaces of the battery case; and
the terminal structures provided as a pair are each electrically connected to one of the positive electrode terminal and the negative electrode terminal so that the extension terminals are each exposed at any one surface of an upper surface, a front surface, and a rear surface of the battery case.

14. The prismatic secondary battery of claim 1, wherein:
the positive electrode terminal and the negative electrode terminal are each disposed on one of two side surfaces of the battery case;
the venting part is disposed on at least one side surface of the two side surfaces of the battery case; and
the terminal structures provided as a pair are each electrically connected to one of the positive electrode terminal and the negative electrode terminal so that the extension terminals are each exposed at a lower surface of the battery case.

15. A prismatic secondary battery, in which six flat surfaces that are first to sixth surfaces form a hexahedral shape, comprising:
a positive electrode terminal and a negative electrode terminal which are disposed on at least one surface of first to sixth surfaces; and
a venting part disposed on at least one surface of the remaining surfaces excluding the surface on which the positive electrode terminal and the negative electrode terminal are disposed.

16. The prismatic secondary battery of claim 15, wherein the positive electrode terminal and the negative electrode terminal are disposed together on any one surface of the first to sixth surfaces.

17. The prismatic secondary battery of claim 16, wherein:
the prismatic secondary battery has a rectangular parallelepiped shape; and
the positive electrode terminal and the negative electrode terminal are disposed together on any one surface excluding a surface having a widest area.

18. The prismatic secondary battery of claim 17, wherein the venting part is disposed on at least one surface of the remaining three surfaces excluding two facing surfaces having a widest area.

19. The prismatic secondary battery of claim 15, wherein one positive electrode terminal and one negative electrode terminal are each disposed on one of two facing surfacesamong the first to sixth surfaces.

20. The prismatic secondary battery of claim 19, wherein:
the prismatic secondary battery has a rectangular parallelepiped shape; and
the positive electrode terminal and the negative electrode terminal are each disposed on one of two facing surfaces excluding a surface having a widest area.
